# EUROPEAN PATENT APPLICATION

(11) **EP 1 566 924 A2**
(43) Date of publication of application: **24.08.2005**
(21) Application number: 05001726.8
(22) Date of filing: 27.01.2005
(51) Int. Cl.: H04L 12/56, H04Q 7/22

(54) **Method for setting general packet radio service attach mode in a mobile station**

(30) Priority: 18.02.2004 KR 2004010836; 31.07.2004 KR 2004060694
(71) Applicant: SAMSUNG ELECTRONICS CO., LTD., Gyeonggi-do (KR)
(72) Inventor: Kim, Yang-Sun c/o SAMSUNG ELECTRONICS CO.,LTD., Suwon-si, Gyeonggi-do (KR); Park, Hong-Ju c/o SAMSUNG ELECTRONICS CO.,LTD., Suwon-si, Gyeonggi-do (KR)
(74) Representative: Grünecker, Kinkeldey, Stockmair & Schwanhäusser Anwaltssozietät

(57) **Abstract**

A method for setting a general packet radio service attach mode in a mobile station (MS) for allowing the MS to be attached to a general packet radio service network. A public land mobile network broadcasts information related to the general packet radio service attach mode to the MS through a downlink carrier of a serving cell. The MS receives the information related to the general packet radio service attach mode broadcasted from the public land mobile network through the downlink carrier of the serving cell and checks the general packet radio service attach mode preset in the public land mobile network based on the information related to the general packet radio service attach mode. The general packet radio service attach mode is set in the MS. Thus, the general packet radio service attach of the MS is timely carried out in match with a request of the public land mobile network, so the MS is adaptively used in relation to a system environment of a network to which the MS is registered.

## Description

The present invention relates to a general packet radio service (GPRS) network, and more particularly to a method for setting a GPRS attach mode in a mobile station (MS) in order to allow the MS to be attached to a GPRS network.

The present invention further relates to a corresponding apparatus.

Although a GPRS technique has been developed for the purpose of providing a global system for mobile communications (GSM), the GPRS technique is also employed for an Interim Standard-136 (IS-136). A GPRS is a new bearer service capable of providing the GSM, while simplifying a wireless access to a packet data network and improving system performance.

In order to use the GPRS, an MS must be registered in a GPRS network through a "GPRS attach." The GPRS attach signifies a procedure, in which the MS provides a serving GPRS support node (SGSN) with an attach request message including a position of a network to which the MS is registered, an identify (ID), information related to security, and several characteristics provided by the MS. Upon receiving the attach request message from the MS, the SGSN accepts the attach request of the MS through an authentication procedure so that the MS can receive the GPRS.

When the MS attempts the GPRS attach, attach types (which will be described below) of the MS may vary depending on an operation mode of a network in which the MS is located. There are three different attach types (of the MS) which are , "GPRS attach", "GPRS Attach while IMSI attached" and "Combined GPRS/IMSI attach". The "Combined GPRS/IMSI attach" is carried out when an operation mode of a GPRS network, to which the MS attempts the GPRS attach, is "1". According to the "Combined GPRS/IMSI attach", a location update is also achieved through one attach procedure. The network having an operation mode of "1" signifies a GPRS network including an interface between the SGSN managing the GPRS and an MSC/VLR (mobile switching center/visitor location register) managing a conventional GSM service. The "GPRS attach" and the "GPRS attach while IMSI attached" are called "normal GPRS attach" and are carried out for a GSM service only. The "GPRS attach" or the "GPRS attach while IMSI attached" is used when an MS is operated with an operation mode C or when an MS is operated with an operation mode A or an operation mode B under a network operation mode 2 or a network operation mode 3. These operation modes will be described below.

In the operation mode A, the MS can simultaneously be provided with the GPRS and GSM service. In the operation mode B, the MS may be provided with only one of the GPRS and GSM service at a certain time even if the MS can simultaneously register the GPRS and GSM service. In the operation mode C, the MS cannot simultaneously be provided with the GPRS and GSM service even though the MS can be registered for both GPRS and GSM service.

Additionally, a "GPRS attach mode" signifies an attach time of the MS to the GPRS network. Currently, network service providers set a GPRS attach mode according to their preference and the MS is requested to perform the GPRS attach according to the GPRS attach mode set by the network service providers. The GPRS attach mode includes an automatic GPRS attach mode and a manual GPRS attach mode.

According to the automatic GPRS attach mode, an MS automatically performs the GPRS attach so that the MS is always maintained in a GPRS attached state. Thus, if the automatic GPRS attach mode is set in the MS, the MS may perform the GPRS attach when the MS is powered on or when the MS selects a new PLMN (public land mobile network) and is maintained in the GPRS attached state.

In contrast, according to the manual GPRS mode, the MS performs the GPRS attach when a user requests to use the GPRS so that the MS is maintained in the GPRS attached state after the user requests to use the GPRS. If the GPRS attached state is terminated, the MS is maintained in a non-GPRS attached state. Thus, if the manual GPRS attach mode is set in the MS, the MS may usually receive only the GSM service. In this state, if the user requests to use the GPRS, and corresponding systems and protocols such as a WAP (wireless application protocol) or an MMS (multimedia message system), the MS performs the GPRS attach. In addition, the MS performs a GPRS detach when the GPRS is finished. That is, the manual GPRS attach mode is intended to assign GPRS resources only when the user of the MS actually requests the GPRS service.

Depending upon the software incorporated into an MS, GPRS attach modes can be based on the individual requirements of a home PLMN or manufacturers' specifications and is programmed in the MS. Thus, the MS may perform the GPRS attach according to the GPRS attach mode preset in the MS regardless of the PLMN thereof. That is, the MS must perform the GPRS attach according to the GPRS attach mode preset in the MS even if the MS is located in other PLMN during international roaming.

For this reason, if the automatic GPRS attach mode is set in the MS, the MS always attempts to be attached to the GPRS network regardless of the PLMN thereof even if the MS does not receive the GPRS. That is, the MS attempts to be maintained in the GPRS attached state by performing a routing area update whenever a routing area (RA) is changed. Additionally, a network must resume the GPRS for an MS in a GPRS suspended state whenever a dedicated mode is changed into an idle mode. If the network fails to resume the GPRS or does not support a GPRS resume function, the MS may perform the routing area update so as to resume the GPRS.

In the GPRS network, the RA is a sub-cell of an LA (local area) and the LA includes at least one RA. Typically, the LA includes a plurality of RAs. That is, one LA consists of N RAs. In a case of a GPRS network having a network operation mode 1, the routing area update must be performed N times if the MS having the automatic GPRS attach mode moves through the N RAs of one LA, even if only one location update is required for the LA. As a result, the location update for the LA is carried out N times although only one location update is necessary for the LA. Even though the automatic GPRS attach mode can be set in the MS so that the MS is continuously maintained in the GPRS attached state, users typically do not require the use of GPRS most of time. Thus, such RA updates can waste system resources. And in particular, if a networks resources are limited or insufficient, this waste of resources can result in a degraded quality of service.

In contrast, the network having the network operation mode 1 can be operated in a paging co-ordination manner so that the network can transmit a message to a CS (circuit switched) paging through a GPRS paging channel or a GPRS traffic channel. However, the MS operated with the manual attach mode cannot utilize the above function of the network. For this reason, a SMS (short message service) is received only through the CS paging of the GSM, instead of the GPRS paging channel or the GPRS traffic channel, although a GSMS (GPRS short message service support) has been developed.

Accordingly, the present invention has been made to solve the above-mentioned problems occurring in the prior art.

It is the object of the present invention to provide a method for setting a GPRS attach mode in an MS in such a manner that a GPRS attach of the MS is carried out according to a request of a network.

This object is solved by the subject matter of the independent claims.

Preferred embodiments are defined in the dependent claims.

An aspect of the present invention is to provide a method for timely performing a GPRS attach by means of an MS according to available resources and an available network state.

In order to accomplish the above, according to one aspect of the present invention, there is provided a method for setting a GPRS (general packet radio service) attach mode in a mobile station (MS) for allowing the MS to be attached to a GPRS network, the method including the steps of broadcasting information related to the GPRS attach mode to the MS through a downlink carrier of a serving cell by using a PLMN selected by the MS, receiving the information related to the GPRS attach mode broadcasted from the PLMN through the downlink carrier of the serving cell, and checking the GPRS attach mode preset in the PLMN based on the information related to the GPRS attach mode by using the MS, and setting the GPRS attach mode in the MS.

According to another aspect of the present invention, there is provided an apparatus that is adapted to operate according to the above-defined method.

The above object and other aspects, features and advantages of the present invention will be more apparent from the following detailed description taken in conjunction with the accompanying drawings, in which:
FIG. 1 is a block diagram illustrating a structure of a GPRS system; and
FIG. 2 is a flowchart illustrating a procedure for setting a GPRS attach mode in an MS according to one embodiment of the present invention.

Hereinafter, embodiments of the present invention will be described with reference to the accompanying drawings. In the following detailed description, a detailed description of known functions and configurations incorporated herein will be omitted when it may make the subject matter of the present invention unclear.

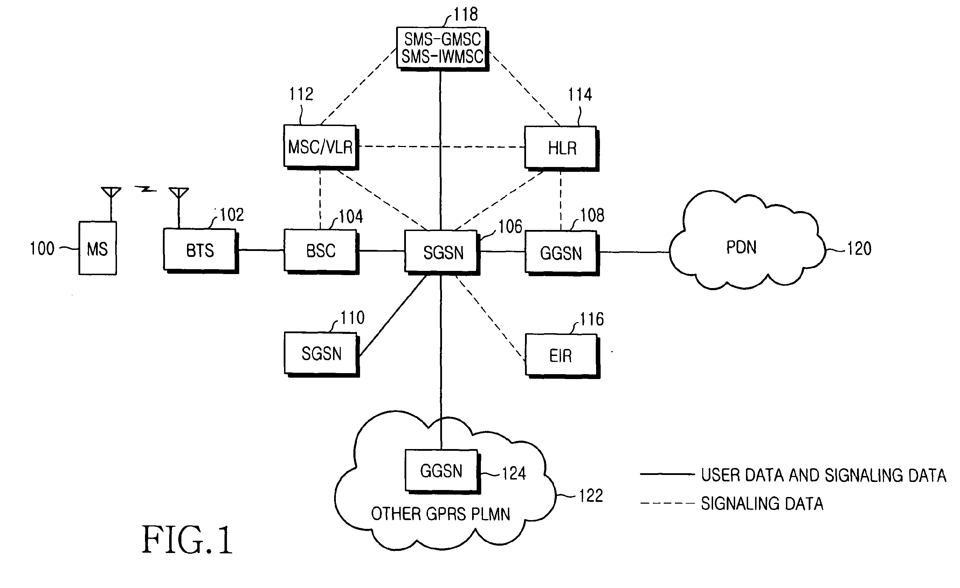

FIG. 1 is a block diagram illustrating a structure of a GPRS system in which data transmitted between elements are represented as solid lines and dotted lines. The solid lines represent the transmission of user data and signaling data and the dotted lines represent the transmission of signaling data only.

Hereinafter, the GPRS system used for the present invention will be described with reference to FIG. 1. An MS 100 is connected to a BTS (base transceiver station) 102 through a radio link so that the MS 100 is connected to an SGSN 106 by way of the BTS 102 and a BSC (base station controller) 104. The SGSN 106 manages one service area. The service area is divided into a plurality of LAas and each LA is divided into a plurality of RAas. Generally, one RA includes of a plurality of cells. The cell is a radio area managed by the BTS 102. A plurality of BTSs 102 are controlled by one BSC 104. The BTS 102 combined with the BSC 104 is called a BSS (base station subsystem). The SGSN 106 transfers packets from/to the MS 100 located in a service area of the SGSN 106. The SGSN 106 has various functions, such as packet routing, packet transfer, mobility management, logical link management, authentication, and accounting. The mobility management function includes an GPRS attach and a GPRS detach of the MS 100 and location management procedures. The SGSN 106 is connected to an external PDN (packet data network) 120 through a GGSN (gateway GPRS support node) 108. The SGSN 106 can be connected to other SGSN 110 or to a GGSN 124 located in other GPRS PLMN 122.

The GGSN 108 is located between a GPRS backbone network and a PDN 120. Packets transmitted from the SGSN 106 are converted into a PDP (packet data protocol) through the GGSN 108 and transferred to other stations through the PDN 120. In contrast, packets transmitted to the GGSN 108 from the PDN 120 may experience the reverse of the above procedure. A main function of the GGSN 108 is to convert PDP addresses available in the PDN 120 into addresses of the MS 100 available in a GSM network, or vice versa. The GGSN 108 must recognize the SGSN 106 managing the MS 100 in order to transfer packets from the PDN 120 to the MS 100. Thus, information related to a present SGSN of a user must be stored in a database of the GGSN 108 together with a user profile. Similarly to the SGSN 106, the GGSN 108 also has a function for performing authentication and accounting.

Generally, a many-to-many relationship is established between the SGSN 106 and the GGSN 108. One GGSN can be used as an interface point between a plurality of SGSNs and one PDN. In contrast, one SGSN may use a plurality of GGSNs in order to transfer packets to various PDNs.

In addition, in an MSCNLR (mobile switching center/visitor location register) 112, an MSC is in charge of mobility management and a voice call process for service subscribers and a VLR is a database for temporarily storing information related to the MS located in an area managed by the VLR. The MSCNLR 112 may expand its function in such a manner that a GSM circuit switch service effectively cooperates with a packet switch service using the GPRS. For example, the MSCNLR 112 can integrally perform a location information update process and can integrally manage an attach procedure. In addition, a paging of the GSM circuit switch service can be carried out through the SGSN 106.

In order to exchange SMS (short message services) messages through the GPRS, an SMS-GMSC of an SMS-GMSC & SMS-IWMSC (short message service-gateway mobile switching center & short message service-interworking mobile switching center) 118 connects to the SGSN 106.

An HLR (home location register) 114 stores a user profile, a present SGSN address, and a PDP address for each GPRS user located in the PLMN. The SGSN 106 and the HLR 114 exchange information therebetween. For instance, the SGSN 106 notifies the HLR 114 of a present location of the MS 100. In addition, if the MS is registered in a new SGSN, the HLR notifies the SGSN of information related to the MS. The GGSN 108 obtains a present location and profile information of a user from the HLR 114. In addition, an EIR (equipment identity register) 116 is a database for managing an ID (identity) of the MS 100 and is used for checking serviceableness of the MS 100.

In the GPRS system having the above structure, the SGSN 106 of the GPRS PLMN broadcasts information related to a GPRS attach mode set in the SGSN 106 to the MS 100 through a downlink carrier channel of a serving cell in which the MS 100 is located. The downlink carrier channel for broadcasting the GPRS attach mode information includes a BCCH (broadcasting control channel). As mentioned above, network providers can select the GPRS attach mode from among an automatic GPRS attach mode and a manual GPRS attach mode according to their preference. Other GPRS attach modes are also selected according to preference of the network providers by taking resources of the GPRS network into consideration. For instance, the network providers can select a GPRS attach mode allowing the MS 100 to perform the GPRS attach only when the user requests to use the GPRS and to maintain the GPRS attached state even if the GPRS has been finished.

The MS 100 receives information related to the GPRS attach mode broadcasted from the PLMN selected by the MS 100 through the downlink carrier of the serving cell and the radio link connecting the MS to the BTS 102. In addition, the MS 100 checks the GPRS attach mode of the PLMN based on the GPRS attach mode information and sets the GPRS attach mode in the MS 100.

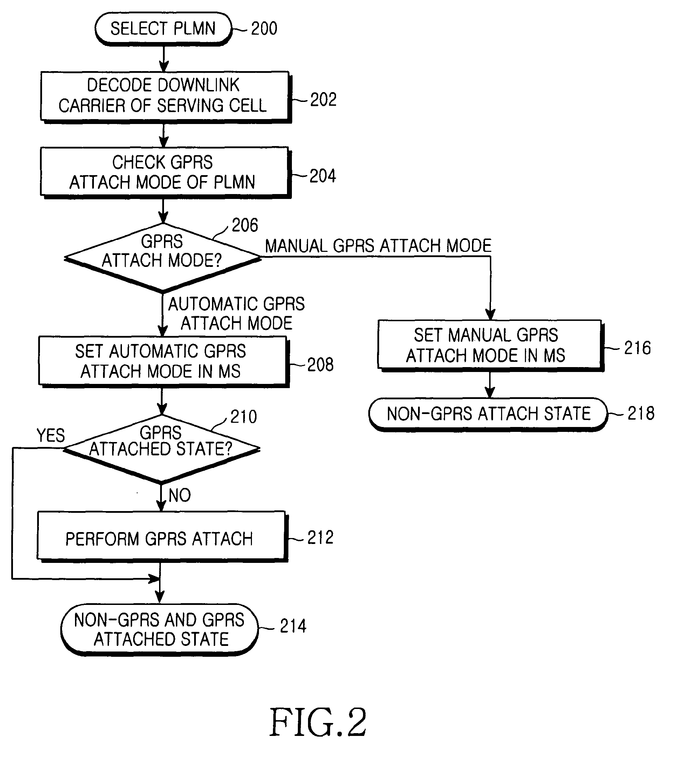

FIG. 2 is a flowchart showing a procedure for setting the GPRS attach mode in the MS 100 according to one embodiment of the present invention when the GPRS attach mode broadcasted from the PLMN selected by the MS 100 is one of the automatic GPRS attach mode and the manual GPRS attach mode.

Hereinafter, the procedure for setting the GPRS attach mode in the MS 100 will be described with reference to FIG. 2. When the MS 100 is powered on or moved, such that the current PLMN is no longer capable of serving the MS 100, the MS 100 selects a PLMN adaptable for the MS 100 and camps on a predetermined cell (step 200). In this state, the MS 100 receives information related to the GPRS attach mode broadcasted from the PLMN which is selected by the MS 100 through the downlink carrier of the serving cell and decodes the GPRS attach mode information (step 202).

Then, the MS 100 checks the GPRS attach mode obtained in step 202. That is, the MS 100 checks the GPRS attach mode set in the PLMN selected by the MS 100 (step 204). Then, the MS 100 checks whether the GPRS attach mode set in the PLMN is an automatic GPRS attach mode or a manual GPRS attach mode (step 206).

If the GPRS attach mode preset in the PLMN is the automatic GPRS attach mode, the MS 100 sets the automatic GPRS attach mode therein (step 208). Then, the MS 100 checks whether or not the MS 100 is in the GPRS attached state (step 210). If the MS 100 is not the GPRS attached state, the MS 100 performs the GPRS attach in step 212 so that the MS 100 is in a non-GPRS and GPRS attached state in step 214. However, if the MS 100 is in the GPRS attached state in step 210, the MS 100 maintains the non-GPRS and GPRS attached state (step 214). If the MS is in the GPRS attached state when the MS 100 selects the PLMN, the MS 100 performs roaming in the GPRS attached state.

In contrast, if the GPRS attach mode preset in the PLMN is the manual GPRS attach mode, the MS 100 sets the manual GPRS attach mode therein (step 216). When the manual GPRS attach mode is set in the MS 100, the MS 100 is maintained in a non-GPRS attached state (step 218). Thus, the MS 100 performs the GPRS attach and is maintained in the GPRS attached state only when the user requests the GPRS. If the GPRS is finished, the MS 100 performs the GPRS detach so that the MS 100 is maintained in the non-GPRS attached state until the user requests the GPRS.

That is, the PLMN broadcasts the GPRS attach mode preset in the PLMN and the MS adaptively performs the GPRS attach according to the GPRS attach mode broadcasted from the PLMN, to which the MS is registered, so that the GPRS attach of the MS can be timely carried out according to an intention of the network provider based on the resources available and the network state.

While the invention has been shown and described with reference to certain preferred embodiments thereof, it will be understood by those skilled in the art that various changes in form and details may be made therein without departing from the scope of the invention as defined by the appended claims. In particular, although it is illustrated in FIG. 2 that the GPRS attach mode is selected from among the automatic GPRS attach mode and the manual GPRS attach mode, other GPRS attach modes can also be selected according to preference of network providers based on the resources of the GPRS network. For example, as mentioned above, a GPRS attach mode allowing the MS 100 to perform the GPRS attach only when the user requests the GPRS while maintaining the MS 100 in the GPRS attached state even if the GPRS has been finished is also available.

## Claims

1. A method for setting a general packet radio service attach mode in a mobile station for allowing the mobile station to be attached to a general packet radio service network, the method comprising the steps of:
i) receiving information related to the general packet radio service attach mode broadcasted from a public land mobile network selected by the mobile station through a downlink carrier of a serving cell, and checking the general packet radio service attach mode preset in the public land mobile network based on the information related to the general packet radio service attach mode by using the mobile station; and
ii) setting the general packet radio service attach mode in the mobile station.

2. The method as claimed in claim 1, further comprising broadcasting said information related to the general packet radio service attach mode to the mobile station through the downlink carrier of a serving cell by using the public land mobile network selected by the mobile station.

3. The method as claimed in claim 1 or 2, wherein the general packet radio service attach mode preset in the public land mobile network includes a first general packet radio service attach mode allowing the mobile station to automatically perform a general packet radio service attach such that the mobile station is always maintained in a general packet radio service attached state, and a second general packet radio service attach mode allowing the mobile station to be maintained in the general packet radio service attached state only when a user requests a general packet radio service and to be maintained in a non-general packet radio service attached state when the general packet radio service is finished.

4. The method as claimed in claim 3, wherein the general packet radio service attach mode preset in the public land mobile network further includes a third general packet radio service attach mode allowing the mobile station to perform the general packet radio service attach only when the user requests the general packet radio service such that the mobile station is maintained in the general packet radio service attached state even if the general packet radio service is finished.

5. The method as claimed in claim 2, wherein the general packet radio service attach mode preset in the public land mobile network includes a first general packet radio service attach mode allowing the mobile station to automatically perform a general packet radio service attach such that the mobile station is always maintained in a general packet radio service attached state, a second general packet radio service attach mode allowing the mobile station to be maintained in the general packet radio service attached state only when a user requests a general packet radio service and to be maintained in a non-general packet radio service attached state when the general packet radio service is finished, and a third general packet radio service attach mode allowing the mobile station to perform the general packet radio service attach only when the user requests the general packet radio service such that the mobile station is maintained in the general packet radio service attached state even if the general packet radio service is finished.

6. An apparatus adapted for setting a general packet radio service attach mode in a mobile station for allowing the mobile station to be attached to a general packet radio service network, the apparatus comprising:
a receiver arranged for receiving information related to the general packet radio service attach mode broadcasted from a public land mobile network selected by the mobile station through a downlink carrier of a serving cell, and for checking the general packet radio service attach mode preset in the public land mobile network based on the information related to the general packet radio service attach mode by using the mobile station; and
means for setting the general packet radio service attach mode in the mobile station.

7. The apparatus as claimed in claim 6, adapted to operate according to one of claims 1 to 5.
